# EUROPÄISCHE PATENTSCHRIFT

(11) **EP 2 859 260 B1**
(45) Veröffentlichungstag und Bekanntmachung des Hinweises auf die Patenterteilung: **29.11.2017**
(21) Anmeldenummer: 13732105.5
(22) Anmeldetag: 10.06.2013
(51) Int. Cl.: F16K 31/04

(54) **VERSTELLVORRICHTUNG FÜR EIN VENTILBAUTEIL, INSBESONDERE EINE VENTILKLAPPE**
ADJUSTING DEVICE FOR A VALVE COMPONENT, IN PARTICULAR A VALVE FLAP
DISPOSITIF DE RÉGLAGE POUR UN ÉLÉMENT DE SOUPAPE, EN PARTICULIER UN CLAPET DE SOUPAPE

(30) Priorität: 12.06.2012 DE 102012105080
(43) Veröffentlichungstag der Anmeldung: 15.04.2015
(73) Patentinhaber: Kokinetics GmbH, 65830 Kriftel (DE)
(72) Erfinder: DIETZ, Horst, 67727 Lohnsfeld (DE)
(74) Vertreter: Patentanwälte und Rechtsanwalt Weiß, Arat & Partner mbB
(86) Internationale Anmeldenummer: PCT/EP2013/061923
(87) Internationale Veröffentlichungsnummer: WO 2013/186173

(56) Entgegenhaltungen:
- DE-C- 295 029
- US-A1- 2005 145 810
- US-A1- 2006 022 159

## Beschreibung

Die vorliegende Erfindung bezieht sich auf eine Verstellvorrichtung für ein Ventilbauteil, insbesondere eine Ventilklappe gemäss dem Oberbegriff von Anspruch 1.

### Stand der Technik

Derartige Vorrichtungen sind bereits in vielfältiger Form und Ausführung auf dem Markt bekannt und gebräuchlich.

In diesem Zusammenhang wird auf die De 299 11 934 U1 verwiesen, welche eine Absperrklappe für staubförmige und körnige Schüttgüter offenbart. Dort ist ein Drucklochmembranzylinder als Antriebsvorrichtung genutzt. Ausserdem wird über ein kompliziertes Drehgestänge die Linearbewegung in eine Schwenkbewegung einer Absperrklappe umgesetzt.

In diesem Zusammenhang wird auf die US 2006/022159 A1 verwiesen, welche eine Verstellvorrichtung für ein Ventilbauteil offenbart, bei dem verschieden Teile direkt über der Ventilklappe angebracht sind. Weiter wird auf die US 2005/0145810 A1 verwiesen, welche eine Ventilspindel offenbart, welche durch das Verdrehen in einem Gehäuse das Öffnen und Schliessen der Ventilklappe offenbart.

Weiterhin wird auf die DE 10 2010 034 843 A1 verwiesen. Dort ist eine Vorrichtung zur Umsetzung einer Drehbewegung in eine Axialbewegung gezeigt. Es handelt sich um eine Ventilvorrichtung, die eine Gewindestange mit einer axial darauf beweglichen Mutter aufweist. Dabei verhindert eine Arretierungskomponente die Drehbewegung der Mutter.

Ausserdem wird auf die DE 10 2009 010 871 B4 hingewiesen. Dort ist ein Antrieb, eine Spindelmutter und eine Antriebswelle gezeigt. Der Antrieb ist derart gestaltet, dass eine Spindelstange auf eine Druckfeder wölkt, die die Spindelstange in schliesslich in Richtung Vorspann. Hierbei ist die Spindelstange der Spindel-Mutter-Anordnung durch Axialkräfte nicht rücktreibbar und derart gestaltet, dass auf die Abriebswelle eine Wickelfeder wirkt, die die Abtriebswelle in Schliessdrehrichtung vorspannt und beim Drehen der Abtriebswelle in Öffnungsdrehrichtung gespannt wird.

Weiterhin wird auf die DE 35 44 669 A1 hingewiesen. Dort ist ein numerisch gesteuertes, elektromechanisches Präzisionsantriebssystem offenbart. Es handelt um einen aktiven Planetenantrieb, der in den Planetenpositionen jeweils einen Antrieb aufweist und ein Sonnenrad antreibt. Nachteilig hierbei ist allerdings, dass keine Selbsthemmung vorhanden ist und sehr viele Bauteile benötigt werden, um einen reibungslosen Ablauf zu gewährleisten. Die Anordnung ist sehr teuer.

### Aufgabe der Erfindung

Aufgabe der vorliegenden Erfindung ist es, eine Verstellvorrichtung der oben genannten Art zu schaffen, welche die Nachteile aus dem Stand der Technik beseitigt und einen einfachen, leicht zu bedienenden Aufbau aufweist, kostengünstig in der Herstellung und platzsparend anzuordnen ist. Insbesondere soll auf ein umständliches Gestänge zur Verstellung von Solarmodulen, Solartrackern od. dgl. verzichtet werden können.

### Lösung der Aufgabe

Zur Lösung der Aufgabe führen die Merkmale des Anspruchs 1.
Die Verstellvorrichtung weist einen Motor als Antrieb, einen Stator sowie einen Rotor in einer ganz oder nur teilweise gekapselten und vor allem uniaxialen Bauweise auf. Dies hat zur Folge, dass noch weniger Bauraum benötigt wird, um die positiven Vorteile der Erfindung zu nutzen. Der uniaxiale Aufbau dieser Verstellvorrichtung erlaubt ferner einen hermetisch dicht gekapselten und sehr kompakten Aufbau von Getriebe und Schwenkantrieb, die bei Bedarf in andere Baukomponenten integriert werden können.
Generell ist als Antrieb einer solchen Verstellvorrichtung der Antrieb zu verstehen, welcher benötigt wird, um über die Verstellvorrichtung ein Ventilbauteil, insbesondere für eine Ventilklappe, eine Drehklappe, eine Kugel an Ventilen, eine Klappe oder einen Absperrhahn oder dergleichen zu verstellen bzw. zu verschwenken. Die Energie zum Antreiben der Verstellvorrichtung und damit zur Verstellung des Ventilbauteils, insbesondere für die Ventilklappe, die Drehklappe, die Kugel an Ventilen, die Klappe oder den Absperrhahn oder dergleichen wird von dem Antrieb zur Verfügung gestellt. Der Antrieb ist bevorzugt ein Elektromotor. Denkbar sind aber auch andere Antriebe, welche ausreichend Energie erzeugen können, die Verstellvorrichtung antreiben zu können.
Die Verstellvorrichtung dient der Übertragung der Energie des Antriebs auf den Rotor, relativ zu dem Stator. Die Verstellvorrichtung ist mit Stator und Rotor uniaxial aufgebaut. Eine uniaxiale Anordnung bedeutet in diesem Zusammenhang, dass die Verstellvorrichtung, der Stator, der Rotor und der Antrieb auf derselben Ebene anschliessend aneinander aufgebaut sind.

Folglich bilden sie einen einachsigen Aufbau. Uniaxial bezeichnet eine Orientierung der Verstellvorrichtung, des Stators, des Rotors und des Antriebs an einer ungebrochenen Linie und dies ist beispielsweise in Achsrichtung, längsachsig oder achsrecht bezeichnenbar. Vorliegend erfolgt die Ausrichtung entlang der Antriebsachse bzw. der Schwenkachse.

Die Verstellvorrichtung ist mit einem Drehgleitelement mit zumindest zwei Drehgleitgewinden versehen sein, die über ein Aussengewinde mit einem Innengewinde in einer Hülse des Stators und des Rotors in Wirkverbindung stehen. Über eine Spindelstange, welche mit dem Motor verbunden ist, werden die Drehgleitgewinde angetrieben und bewegt, wodurch sich über die Wirkverbindung auch der Stator und der Rotor drehen und so ein Verschwenken beispielsweise der Ventilklappe oder eines anderen Verschlusselements erfolgen kann. Es ist ein Drehgleitelement vorgesehen, welches über ein Innengewinde mit der Spindelstange selbst in Wirkverbindung steht. Das Drehgleitelement ist mit zumindest zwei Drehgleitführungsnuten versehen, in denen Drehgleitführungselemente geführt sind, die wiederum an einer dem Drehgleitelement zugewandten Innenseite der Hülsen des Stators und des Rotors angeordnet sind. Die Hülsen von Stator und Rotor sind ansonsten innen glatt und ohne Nuten.
Die Drehgleitführungsnuten sind in Form einer Langnut in eine der Innenseite der Hülsen zugewandten Oberfläche des Drehgleitelements eingelassen, sind jedoch nicht bis zu dem Gewinde des Drehgleitelementes durchgebrochen. Durch die Wirkverbindung zwischen Innengewinde des Drehgleitelementes und Aussengewinde der Spindelstange kann das Drehgleitelement auf der Spindelstange axial entlang der Antriebs- bzw. Schwenkachse verschoben werden.

Die Steigung der wendelförmig bzw. schraubenförmig verlaufenden Drehgleitführungsnuten kann unterschiedlich sein. Wird das Drehgleitelement axial entlang der Antriebs- bzw. Schwenkachse bzw. der Spindelstange verschoben, so bedeutet dies eine unterschiedliche Drehung des Stators und des Rotors um die Antriebs- bzw. Schwenkachse. Folglich verdreht sich der Rotor relativ zum Stator um den Differenzwinkel der Drehgleitführungsnuten zueinander bzw. voneinander weg. Wenn die beiden Drehgleitführungsnuten gleichsinnig sind, aber unterschiedlich steigend verlaufen, ist es die Differenz der Winkel. Bei gegensinniger Drehrichtung der Drehgleitführungsnuten ist es die Summe der Winkel.
Im Grunde können die Drehgleitführungsnuten jede beliebige Form haben und auch durchgehend unregelmässig kurvig sein. Der Relativwinkel resultiert immer aus dem Differenzwinkel. Die Position des Drehgleitelementes wird durch die Spindelstange eingestellt bzw. durch den Motor, der die Spindelstange um die Antriebs- bzw. Schwenkachse dreht und dabei das Drehgleitelement entlang dieser Antriebs- bzw. Schwenkachse verschiebt.

Es sind ein Rohr oder ein Rohrelement vorgesehen, die den Stator und/oder den Rotor zumindest teilweise umschliessen und abdichten und innerhalb derer sich der Stator und der Rotor verschieben lassen. Im Falle der Vorsehung des Rohres oder einer Hülse verläuft dieses bevorzugt allerdings abdeckend und dichtend über den Dichtungsbereich zwischen dem Stator und dem Rotor, so dass auf eine zusätzliche Dichtung verzichtet werden kann. Optional können jedoch weitere Dichtungselemente zusätzlich vorgesehen sein.
Die Verstellvorrichtung schwenkt mit Antrieb des Motors das am Rotor befestigte Solarmodul um einen gewissen Winkelbereich, typischerweise maximal um plus minus 180 Grad. Die Verstellvorrichtung wandelt dabei schnelle Motordrehungen um die Antriebsachse in langsame Bewegungen einer Schwenkachse um, wobei bauartbedingt die Antriebsachse und die Schwenkachse zusammenfallen. Über ein Befestigungselemente kann die Verstellvorrichtung beispielsweise an einem Ventilgehäuse befestigt werden.
Eine erfindungsgemässe Verstellvorrichtung weist den Vorteil auf, dass beispielsweise ein integrierte Elektroantrieb mit hohem Wirkungsgrad und starker Untersetzung eingesetzt werden kann. Dies führt beispielsweise zu einer beachtlichen Gewichtsersparnis. Ausserdem ist eine erfindungsgemässe Verstellvorrichtung gekapselt und korrosionsfest ausgebildet. Die selbsthemmende Wirkung der erfindungsgemässen Verstellvorrichtung, welche sich aus dem Zusammenspiel der uniaxialen Anordnung von Motor, Rotor, Stator und Drehgleitelement ergibt, führt zu einer Energieersparnis, sodass beispielsweise das Offenhalten einer Ventilklappe oder das Geschlossenhalten einer Ventilklappe mit weniger Energieaufwand betrieben werden kann. Dadurch wiederum ergibt sich ein hoher Wirkungsgrad bei einer kompakten rohrförmigen Bauform. Insbesondere ist die erfindungsgemässe Verstellvorrichtung auch für Absperrhähne per Fernsteuerung einsetzbar. Ausserdem ist die erfindungsgemässe Verstellvorrichtung auch als Nachrüstsatz herstellbar. Der Antrieb kann hierbei über eine Stator-Befestigung uniaxial mit der vorhandenen Schwenkachse eines Schwenkventils kombiniert werden. Dadurch wird der Kugelhahn oder die Ventilklappe mit Schwenkwinkel von ca. 90 ° betätigt. Der Rotor trägt hierbei einen Schwenkgreifer, der den vorhanden Schwenkgriff oder das Drehrad erfasst. Die uniaxiale Anordnung von Rotor, Stator, Motor und Drehgleitelement führt vorteilhaft zu dem Umstand, dass die gesamte Antriebseinheit rohrförmig aufgebaut ist und in sehr enge Schächte abgesenkt werden kann. Hieraus wiederum ergibt sich der Vorteil, dass ältere, manuelle Ventile auf Motorantrieb nachrüstbar wären.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematische Draufsicht auf eine erfindungsgemässe Verstellvorrichtung mit einem Drehgleitelement;
Figur 2 eine Schnittansicht eines weiteren Ausführungsbeispiels einer erfindungsgemässen Verstellvorrichtung mit einem Drehgleitelement; und
Figur 3 eine Schnittdarstellung eines weiteren Ausführungsbeispiels der erfindungsgemässen Verstellvorrichtung mit einem Drehgleitelement.

### Ausführungsbeispiele

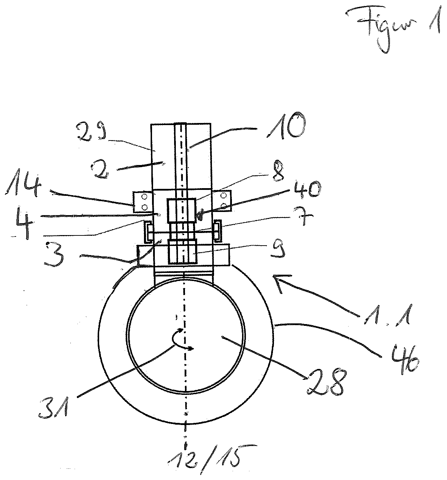

Gemäss Figur 1 ist eine Verstellvorrichtung 1.1 für ein Ventilbauteil 28, wie zum Beispiels eine Drehklappe oder eine Kugel an Ventilen, Klappen oder Absperrhähnen gezeigt. Diese Verstellvorrichtung 1.1 weist einen Motor 2, einen Stator 3 sowie einen Rotor 4 in einer nur teilweise gekapselten Bauweise auf. So ist der Rotor 4 zumindest teilweise in einer Hülse 29 angeordnet. Ein Drehgleitelement 40 mit zwei gegenläufigen Drehgleitgewinden 8 und 9, die über einen festen Verbinder 7 miteinander verbunden sind, verbindet den Stator 3 mit dem Rotor 4.

Eine Spindelstange 10 ist einends auf nicht näher gezeigte Art in dem Motor 2 gelagert und wird von diesem angetrieben. Andernends ist die Spindelstange 10 in einer nicht näher gezeigten Spindelmutter gelagert. Die Spindelstange 10 steht in Wirkverbindung mit den beiden Drehgleitgewinden 8 und 9 und somit mit dem Stator 3, dem Rotor 4 und damit der Hülse 29. Die Spindelstange 10 dreht um eine Längs- bzw. Antriebsachse 12.

Über ein Befestigungselement 14 kann die Verstellvorrichtung 1.1 beispielsweise an einem nicht näher gezeigten Ventilgehäuse befestigt werden. Bei einer Drehung des Drehgleitelements 40, wie sie ein Pfeil 31 andeutet, schwenkt die Ventilklappe 28 nach unten und verschliesst eine nicht gezeigte Öffnung.

Die Verstellvorrichtung 1.1 schwenkt mit Antrieb des Motors 2 die am Rotor 4 befestigte Ventilklappe 28 um einen gewissen Winkelbereich, typischerweise maximal um plus minus 90 Grad. Die Ventilklappe 28 schliesst oder öffnet sich dann relativ zu einem Ventilkörper 46. Die Verstellvorrichtung 1.1 wandelt dabei schnelle Motordrehungen um die Antriebsachse 12 in langsame Bewegungen einer Schwenkachse 15 um, wobei bauartbedingt die Antriebsachse 12 und die Schwenkachse 15 zumindest fast, vorliegend jedoch ganz zusammenfallen und meist identisch sind.

Der uniaxiale Aufbau dieser Verstellvorrichtung 1.1 erlaubt einen hermetisch dicht gekapselten und sehr kompakten Aufbau von Getriebe und Schwenkantrieb, die bei Bedarf in andere Baukomponenten integriert werden können.

Die Drehgleitgewinde 8 und 9 sind bei einer Drehung der Spindelstange 10 entlang der Antriebs- bzw. Schwenkachse 12 bzw. 15 relativ zu dem Stator 3 und dem Rotor 4 verschiebbar. Helikale gegenläufige Gleitführungen verwandeln die Relativverschiebung der Drehgleitgewinde 8 und 9 sowie des Stators 3 und des Rotors 4 in eine Drehung zwischen Stator 3 und Rotor 4. So entsteht eine langsame, kraftvolle Drehung des Rotors 4 um die Antriebs- bzw. Schwenkachse 12 bzw. 15.

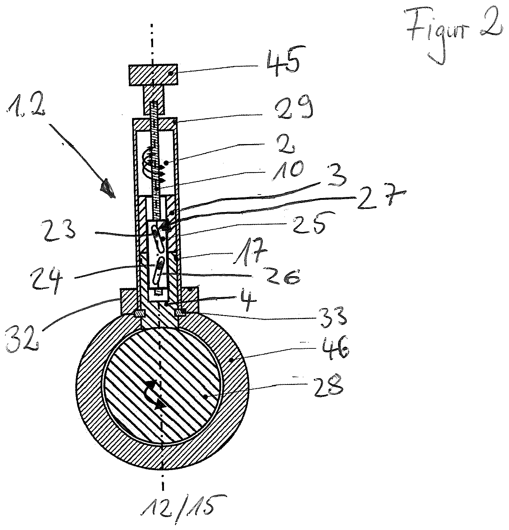

In Figur 2 ist ein weiteres Ausführungsbeispiel einer Verstellvorrichtung 1.2 gezeigt. Das Ausführungsbeispiel unterscheidet sich von dem Ausführungsbeispiel gemäss Figur 1 dadurch, dass es sich um eine vollständig gekapselte Bauweise handelt, d.h. sämtliche Bauteile sind entweder in der Hülse 29 oder einem weiteren Rohrelement 22 eingebaut. Die Hülse 29 verläuft abdeckend und dichtend über den Dichtungsbereich zwischen dem Stator 3 und dem Rotor 4, so dass auf eine zusätzliche Dichtung verzichtet werden kann. Optional kann jedoch ein Dichtungselement 17 zusätzlich vorgesehen sein.

Anstelle der beiden Drehgleitgewinde 8 und 9 sind Drehgleitführungselemente 23 und 24 vorgesehen, wobei das Drehgleitführungselement 23 innen an der Hülse des Stators 3 angeordnet ist und das Drehgleitführungselement 24 innen an der Hülse des Rotors 4. Die Hülsen von Stator 3 und Rotor 4 sind ansonsten innen glatt und ohne Nuten.

Innerhalb der Hülsen des Stators 3 bzw. des Rotors 4 ist weiterhin ein Drehgleitelement 27 mit Drehgleitführungsnuten 25 und 26 vorgesehen. Die Drehgleitführungselemente 23 und 24 sind in den Drehgleitführungsnuten 25 bzw. 26 geführt, welche in Form einer Langnut in eine Oberfläche des Drehgleitelements 27 eingelassen sind, jedoch nicht bis zu einem nicht näher gezeigten Gewinde des Drehgleitelementes 27 durchgebrochen sind. Das Gewinde des Drehgleitelementes 27 steht in Wirkverbindung mit einem Gewinde der Spindelstange 10, wodurch das Drehgleitelement 27 auf der Spindelstange 10 entlang der Antriebs- bzw. Schwenkachse 12 bzw. 15 verschiebbar ist.

Die Steigung der wendelförmig bzw. schraubenförmig verlaufenden Drehgleitführungsnuten 25 und 26 kann unterschiedlich sein.

Wird das Drehgleitelement 27 axial entlang der Antriebs- bzw. Längsachse 12 bzw. der Spindelstange 10 verschoben, so bedeutet dies eine unterschiedliche Drehung des Stators 3 und des Rotors 4 um die Antriebs- bzw. Schwenkachse 12 bzw. 15. Folglich verdreht sich der Rotor 4 relativ zum Stator 3 um den Differenzwinkel der Drehgleitführungsnuten 25 und 26 zueinander bzw. voneinander weg. Wenn die beiden Drehgleitführungsnuten 25 und 26 gleichsinnig sind, aber unterschiedlich steigend verlaufen, ist es die Differenz der Winkel. Bei gegensinniger Drehrichtung der Drehgleitführungsnuten 25 und 26 ist es die Summe der Winkel.

Im Grunde können die Drehgleitführungsnuten 25 und 26 jede beliebige Form haben und auch durchgehend unregelmässig kurvig sein. Der Relativwinkel resultiert immer aus dem Differenzwinkel. Die Position des Drehgleitelementes 27 wird durch die Spindelstange 10 eingestellt bzw. durch den Motor 2, der die Spindelstange 10 um die Antriebs- bzw. Schwenkachse 12 bzw. 15 dreht und dabei das Drehgleitelement 27 entlang dieser Antriebs- bzw. Schwenkachse 12 bzw. 15 verschiebt.

Weiterhin umfasst die Verstellvorrichtung 1.2 die Hülse 29, das Rohrelement 22 und ein Aufnahme 32, zu dem ein Klemmelement 33 mit dem Rotor 4 relativ zum Stator 3 axial fixiert wird. Für das Klemmelement 33 kann ferner eine nicht näher gezeigte Ringklemme vorgesehen sein. Diese Ringklemme hält den Rotor 4 relativ zu dem Stator 3. Die Aufnahme 32 dient hierbei der Abdichtung gegen möglicherweise ausdringendes Medium.

Die Ventilklappe 28 ist wieder derart angeordnet, dass sie sich gegenüber dem Ventilkörper 46 schliesst oder öffnet.

Daneben ist in Figur 2 ein Handrad 45 gezeigt, welches mit der Spindelstange 10 in Wirkverbindung steht. Sollte es aus irgendeinem Grund zu einem Ausfall des Motors 2 kommen, so kann die Ventilklappe 28 auch durch Drehen des Handrads 45 betätigt werden. Dazu wird der Motor 2 auf eine nicht näher beschriebene Art herausgeschaltet und der Nutzer betätigt die Verstellvorrichtung 1.2 lediglich durch das Handrad 45.

In einem anderen Ausführungsbeispiel kann beispielsweise auch ganz auf den Motor 2 verzichtet werden. Dieser Vorteil ergibt sich aus der selbsthemmenden Wirkung der erfindungsgemässen Verstellvorrichtung 1.2. In einem solchen Fall wird die Ventilklappe 28 dann lediglich mit dem Handrad 45 bedient.

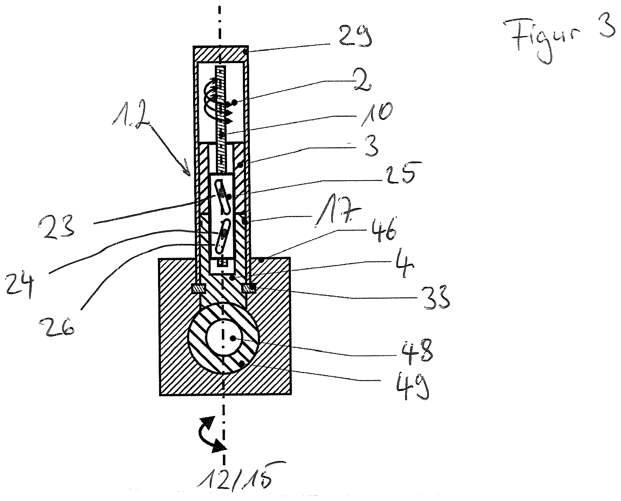

In Figur 3 ist die Verstellvorrichtung 1.2 aus Figur 2 gezeigt. Im Rahmen der Ausführungen zu Figur 3 wird auf die Wiederholung aller Merkmale der Figur 2 verzichtet. Es wird vielmehr darauf hingewiesen, dass die in der Figur 2 gemachten Ausführungen auch für die Figur 3 gelten sollen. Dies gilt insbesondere dann, wenn für die gleichen Merkmale die gleichen Bezugsziffern vergeben wurden.

Anders als in Figur 2 ist nun aber eine Ventilöffnung 48 gezeigt, welche über ein Verschlusselement 49 in Form eines Kugelhahns geschlossen oder geöffnet werden kann. Ausserdem wurde in Figur 3 auf eine Ausführung mit Handrad verzichtet, sodass lediglich der Motor 2 für den Antrieb der Spindelstange 10 zuständig ist.

**Bezugszeichenliste**

| | | | | | |
|---|---|---|---|---|---|
| 1 | Verstellvorrichtung | 34 | Ringklemme | 67 | |
| 2 | Motor | 35 | Solartracker | 68 | |
| 3 | Stator | 36 | Sockel | 69 | |
| 4 | Rotor | 37 | Drehgelenk | 70 | |
| 5 | | 38 | Boden | 71 | |
| 6 | | 39 | Unterseite | 72 | |
| 7 | | 40 | Dregleitelement | 73 | |
| 8 | Drehgleitelement | 41 | Pfeil | 74 | |
| 9 | Drehgleitelement | 42 | Pfeil | 75 | |
| 10 | Spindelstange | 43 | | 76 | |
| 11 | Spindelmutter | 44 | | 77 | |
| 12 | Antriebsachse | 45 | Handrad | 78 | |
| 13 | | 46 | Ventilkörper | 79 | |
| 14 | Befestigungselement | 47 | | | |
| 15 | Schwenkachse | 48 | Ventilöffnung | | |
| 16 | | 49 | Verschlusselement | | |
| 17 | Dichtungselement | 50 | | | |
| 18 | | 51 | | | |
| 19 | | 52 | | | |
| 20 | | 53 | | | |
| 21 | | 54 | | | |
| 22 | Rohrelement | 55 | | | |
| 23 | Drehgleitführungselem. | 56 | | | |
| 24 | Drehgleitführungselem. | 57 | | | |
| 25 | Drehgleitführungsnut | 58 | | | |
| 26 | Drehgleitführungsnut | 59 | | | |
| 27 | Drehgleitelement | 60 | | | |
| 28 | Solarmodul | 61 | | | |
| 29 | Hülse | 62 | | | |
| 30 | Befestigungselement | 63 | | | |
| 31 | Pfeil | 64 | | | |
| 32 | Lagerbock | 65 | | | |
| 33 | Klemmelement | 66 | | | |

## Patentansprüche

1. Verstellvorrichtung für ein Ventilbauteil, insbesondere eine Ventilklappe (28), eine Drehklappe, eine Kugel an Ventilen, eine Klappe oder ein Absperrhahn oder dergleichen mit
- einem Motor (2),
- einem Stator (3),
- einem Rotor (4) und
- einem Drehgleitelement (40, 27); wobei die Verstellvorrichtung einen uniaxialen Aufbau aufweist, wobei eine Antriebsachse (12) gleichzeitig eine Schwenkachse (15) ist und das Drehgleitelement (27) zumindest zwei Drehgleitführungsnuten (25, 26) und zumindest zwei Drehgleitführungselemente (23, 24) umfasst, wobei der Stator (3) und/oder der Rotor (4) zumindest teilweise gekapselt ausgebildet sind, wobei eine Spindelstange (10) zum Antreiben des Drehgleitelements (40, 27) vorgesehen ist, wobei zumindest der Stator (3) zumindest teilweise von einer Hülse (29) umschlossen ist, wobei die Hülse (29) zumindest teilweise den Rotor (3) umschliessen kann, wobei der Rotor (4) zumindest teilweise von einem Rohrelement (22) umschlossen ist, wobei das Drehgleitelement (40) zumindest zwei Drehgleitgewinde (8, 9) aufweist, wobei die Verstellvorrichtung die Hülse (29), das Rohrelement (22) und eine Aufnahme (32), die der Abdichtung gegen möglicherweise eindringendes Medium dient umfasst, und ein Klemmelement (33) mit dem der Rotor (4) relativ zum Stator (3) axial fixiert wird, wobei das Klemmelement (33) eine Ringklemme ist, wobei die Ringklemme den Rotor (4) relativ zu dem Stator (3) hält.

## Claims

1. Adjusting device for a valve component, in particular a valve flap (28), a pivoting flap, a ball on valves, a flap or a stopcock or the like, having
- a motor (2),
- a stator (3),
- a rotor (4) and
- a rotary sliding element (40, 27);
wherein the adjusting device has a uniaxial design,
wherein a drive axis (12) is at the same time a swivel axis (15) and the rotary sliding element (27) comprises at least two rotary sliding guiding grooves (25, 26) and at least two rotary sliding guiding elements (23, 24), wherein the stator (3) and/or the rotor (4) are formed at least partially encapsulated, wherein a spindle rod (10) is provided for driving the rotary sliding element (40, 27), wherein at least the stator (3) is enclosed at least partially by a sleeve (29), wherein the sleeve (29) can enclose at least partially the rotor (3), wherein the rotor (4) is at least partially enclosed by a tube element (22), wherein the rotary sliding element (40) has at least two rotary sliding threads (8, 9), wherein the adjusting device comprises the sleeve (29), the tube element (22) and a receptacle (32) which is used for sealing against possibly penetrating medium, and a clamping element (33) with which the rotor (4) is axially fixed relative to the stator (3), wherein the clamping element (33) is a ring clamp, wherein the ring clamp holds the rotor (4) relative to the stator (3).

## Revendications

1. Dispositif de réglage pour un élément de soupape, en particulier un clapet de soupape (28), un clapet rotatif, une bille de soupape, un clapet ou un robinet d'arrêt ou autre, avec
- un moteur (2),
- un stator (3),
- un rotor (4) et
- un élément coulissant rotatif (40, 27);
dans lequel le dispositif de réglage présente une construction uni-axiale,
dans lequel un axe d'entraînement (12) est en même temps un axe de pivotement (15) et l'élément coulissant rotatif (27) comporte au moins deux rainures de guidage de coulissement rotatif (25, 26) et au moins deux éléments de guidage de coulissement rotatif (23, 24), dans lequel le stator (3) et/ou le rotor (4) sont réalisés au moins partiellement encapsulés, dans lequel est prévue une tige filetée (10) pour l'entraînement de l'élément coulissant rotatif (40, 27), dans lequel au moins le stator (3) est entouré au moins partiellement d'un manchon (29), dans lequel le manchon (29) peut entourer au moins partiellement le rotor (3), dans lequel le rotor (4) est entouré au moins partiellement par un élément de tube (22), dans lequel l'élément coulissant rotatif (40) présente au moins deux filets coulissants rotatifs (8, 9), dans lequel le dispositif de réglage comporte le manchon (29), l'élément de tube (22) et un réceptacle (32) qui sert de moyen d'étanchéité contre un milieu pouvant possiblement y pénétrer, et un élément de serrage (33) par lequel le rotor (4) est fixé axialement par rapport au stator (3), l'élément de serrage (33) étant une pince annulaire, la pince annulaire maintenant le rotor (4) par rapport au stator (3).
